# FASCICULE DE BREVET EUROPEEN

(11) **EP 1 072 501 B1**
(45) Date de publication et mention de la délivrance du brevet: **21.12.2005**
(21) Numéro de dépôt: 00402114.3
(22) Date de dépôt: 24.07.2000
(51) Int. Cl.: B62D 25/08

(54) **Extrémité frontale modulaire de véhicule**
Modularer Vorbaubereich eines Fahrzeuges
Modular front end of a vehicle

(30) Priorité: 30.07.1999 US 365318
(43) Date de publication de la demande: 31.01.2001
(73) Titulaire: Valeo Inc., Auburn Hills, MI 48326 (US)
(72) Inventeur: Latcau, Alexandra, Rochester Hills, MI 48307 (US)
(74) Mandataire: Rolland, Jean-Christophe

(56) Documents cités:
- FR-A- 2 805 497
- US-A- 5 573 299
- US-A- 5 658 041

## Description

La présente invention concerne un ensemble d'extrémité frontale de véhicule et un procédé de montage d'un véhicule.

Depuis quelque temps, on a réalisé qu'on pouvait simplifier le montage des véhicules en procurant des modules d'extrémité frontale qui combinent le système de refroidissement du véhicule et le système d'éclairage du véhicule. Le module d'extrémité frontale comprend un ensemble support qui peut être en matière plastique ou en métal et qui peut procurer des montages pour le pare-chocs du véhicule. Un tel module est décrit dans US-A 5 573 299, qui couvre les caractéristiques du préambule de la revendication 1.

En fabriquant l'ensemble support et en installant préalablement les composants de refroidissement sur le module, on réduit les problèmes d'alignement en même temps qu'on réduit le coût et le poids pour la même fonction.

Il y a nombre d'autres avantages pour le constructeur, à savoir la réduction du temps de montage d'un véhicule, une économie d'espace dans les installations et une meilleure finition du véhicule.

Bien qu'il soit évidemment souhaitable de fabriquer la partie structurale d'un module d'extrémité frontale par une seule simple technique peu coûteuse telle que le moulage par injection, on a trouvé que le module résultant pouvait ne pas avoir la résistance mécanique suffisante pour toutes les applications. Avec une structure support monobloc, il est également nécessaire de fixer le système de refroidissement comprenant un ou plusieurs échangeurs thermiques dans une ouverture définie par une paroi continue. Ceci peut exiger des fixations spécialisées et entraîner des difficultés d'accès pendant une réparation.

C'est donc un but de la présente invention de procurer un ensemble d'extrémité frontale de véhicule dans lequel la portion supportant l'appareil de refroidissement a une résistance mécanique suffisante. C'est un deuxième but de la présente invention de simplifier la fixation de l'appareil de refroidissement sur un ensemble d'extrémité frontale de véhicule.

Selon un premier aspect de la présente invention, il est procuré un ensemble pour l'extrémité frontale d'un véhicule selon la revendication 1.

De façon avantageuse, lesdites première et deuxième parties comprennent toutes deux de la matière plastique.

De façon appropriée, la première partie frontale est moulée par injection et la deuxième partie est moulée par extrusion-soufflage.

De façon appropriée, les dispositifs de fixation sont constitués par des boulons et des écrous.

De préférence, la première partie comprend un élément métallique surmoulé par de la matière plastique.

De façon avantageuse, l'élément métallique est allongé.

De façon avantageuse, l'élément métallique a une portion de fixation pour permettre d'y fixer un verrou de capot.

De préférence, la deuxième partie comprend des dispositifs de fixation d'une poutre pare-chocs.

De façon avantageuse, les dispositifs de fixation de la poutre pare-chocs comprennent des trous dans la face avant de la deuxième partie.

De façon appropriée, les trous sont des trous traversants.

De façon avantageuse, la première partie comprend une portion monobloc de carénage de ventilateur.

En variante, les première et deuxième parties ont toutes deux des montages pour un carénage de ventilateur séparé.

De façon appropriée, la première partie a des montages pour des fixations d'ailes du véhicule.

De façon avantageuse, l'ensemble définit des portions de déflecteurs d'air pour diriger un courant d'air dans le compartiment moteur du véhicule.

Selon un deuxième aspect de la présente invention, il est procuré un module d'extrémité frontale de véhicule selon le libellé de la revendication 17 et un appareil de refroidissement.

Selon un troisième aspect de l'invention, il est procuré un procédé de montage d'un module d'extrémité frontale de véhicule selon la revendication 18.

De préférence, ladite étape de fixation consiste à disposer des boulons à travers des portions de l'une desdites première et deuxième parties, à faire passer lesdits boulons à travers l'autre desdites parties et à fixer des écrous sur lesdits boulons.

De préférence, ledit procédé consiste en outre à procurer un pare-chocs structural et à fixer ledit pare-chocs structural sur ladite deuxième partie.

De façon avantageuse, ledit procédé consiste en outre à fixer ledit pare-chocs structural sur le véhicule, d'où il résulte que ladite extrémité frontale et ledit appareil de refroidissement sont fixés sur le véhicule.

De façon appropriée, ledit procédé consiste en outre à procurer un verrou de capot et à fixer ledit verrou de capot sur ladite première partie.

On va maintenant décrire, à titre d'exemple seulement, une réalisation de la présente invention, en liaison avec le dessin joint, sur lequel :
- la figure 1 est une vue en perspective explosée d'un ensemble pour une extrémité frontale de véhicule selon une réalisation préférée de l'invention ; et
- la figure 2 montre les composants d'un module d'extrémité frontale selon une réalisation préférée de l'invention.

Sur les deux figures, des repères identiques désignent des parties identiques.

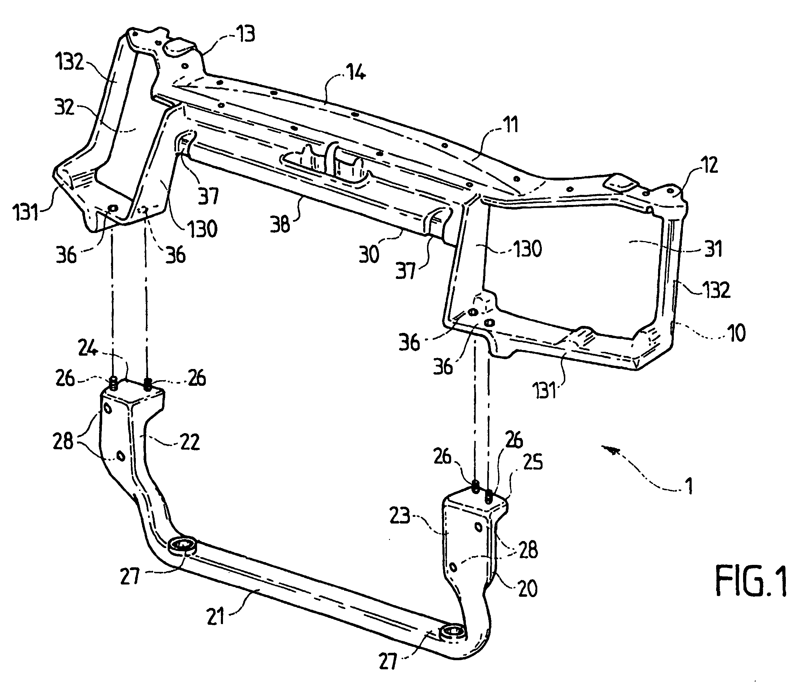

En se référant d'abord à la figure 1, un ensemble d'extrémité frontale de véhicule 1 comprend une première partie 10 et une deuxième partie 20.

La première partie comprend un élément métallique 11 généralement allongé, ayant une portion centrale rectiligne 14 et deux portions terminales 12, 13 qui sont coudées vers l'arrière par rapport à la portion centrale. Une portion en matière plastique 30 est moulée par injection sur cet élément métallique 11. La portion en matière plastique a une région centrale 38 qui s'étend généralement vers le bas depuis l'élément métallique 11 dans la région centrale et qui définit en outre, avec les portions terminales 12, 13 de l'élément métallique, des ouvertures 31, 32 pour les phares.

Dans ce but, la portion en matière plastique 30 forme, à la fin de la région centrale, des coudes pratiquement perpendiculaires à la région centrale constituant des premières portions latérales en vis-à-vis 130, puis elle s'étend en des portions inférieures 131 sensiblement parallèles aux régions terminales 12, 13 et elle se termine en des portions de retour 132 revenant aux extrémités des régions terminales 12, 13 de l'élément métallique.

Dans la réalisation décrite, la portion en matière plastique est également moulée sur le côté inférieur des régions terminales 12 et 13 de l'élément métallique, mais ceci n'est pas essentiel.

L'ensemble comprend également une deuxième partie 20 en forme générale de U, qui a un élément central 21 se prolongeant au niveau de ses deux extrémités par des portions verticales 22, 23. Les extrémités 24, 25 des portions verticales 22, 23 ont des moyens de fixation 26 sous la forme de goujons qui passent à travers des trous correspondants 36 dans les portions inférieures 131 de la partie supérieure en matière plastique 30, d'où il résulte que les deux parties sont assemblées ensemble.

La deuxième partie 20 a, en outre, sur sa surface frontale, des trous de fixation 28 sur chacune des portions verticales 22, 23 pour la fixation sur elle d'un pare-chocs structural.

Lorsque les deux parties sont assemblées, la deuxième partie définit, en coopération avec les portions latérales s'étendant vers le bas 130 et la portion centrale 38 de la partie en matière plastique 30, une ouverture pour recevoir un ensemble de refroidissement. Dans ce but, la portion centrale 21 de la deuxième partie a des trous 27 à chacune de ses extrémités et la région centrale 38 de la portion en matière plastique de la première partie a également des trous 37 vers ses extrémités.

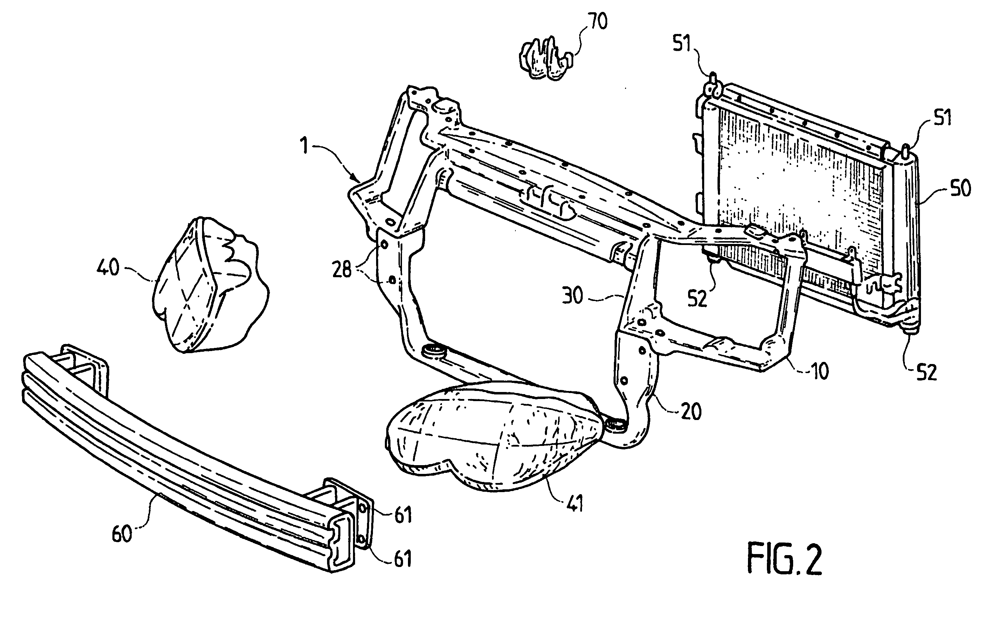

On va maintenant décrire le module et son assemblage en se référant à la figure 2.

En se reportant à la figure 2, le module comprend l'ensemble structural d'extrémité frontale 1, deux phares 40, 41, un appareil de refroidissement 50, un pare-chocs 60 et un verrou de capot 70.

On voit sur cette figure 2 que l'appareil de refroidissement, qui comprend de façon caractéristique un radiateur de refroidissement du moteur, un condenseur pour un conditionnement d'air et/ou un refroidisseur d'huile, avec un ventilateur, un moteur de ventilateur et un carénage, a deux tétons 51 s'étendant vers le haut depuis ses extrémités supérieures et deux tétons 52 s'étendant vers le bas depuis ses extrémités inférieures extérieures.

Pour assembler le dispositif, les tétons s'étendant vers le bas 52 sont placés dans les trous 27 de la deuxième partie 20 et ensuite la deuxième partie 20 est accouplée à la première partie 10 de façon que les tétons s'étendant vers le haut 51 de l'appareil de refroidissement pénètrent dans les trous 37 dans les portions inférieures 131 de la partie supérieure et que les goujons 26 pénètrent dans les trous 36 de la partie supérieure. Des écrous appropriés sont vissés sur les goujons 26 de telle sorte que l'appareil de refroidissement 50 est emprisonné dans l'ensemble 1.

En variante, l'appareil de refroidissement peut être monté à demeure dans le module.

Le pare-chocs structural 60 est ensuite fixé sur l'ensemble 1 en utilisant les trous 28 avec des boulons passant à travers des trous appropriés 61 dans le pare-chocs 60. Les phares 40, 41 sont fixés dans les ouvertures de phares 31, 32 et le pare-chocs est ensuite fixé sur le reste du véhicule par l'intermédiaire de boulons de pare-chocs, ce qui fixe ainsi l'ensemble d'extrémité frontale sur le reste du véhicule.

La partie supérieure de l'extrémité frontale peut avoir des montages pour les ailes du véhicule.

L'homme de l'art appréciera aisément qu'on peut apporter diverses autres améliorations. De façon spécifique, on peut remplacer la deuxième partie inférieure de l'ensemble par deux demi-parties, une pour chaque côté de l'appareil de refroidissement. Les deux demi-parties sont fixées ensemble lors de l'assemblage.

Une autre réalisation, non représentée, intègre un ou plusieurs réservoirs de stockage de liquide dans la partie inférieure 20 ; l'un de ces réservoirs est utilisé comme réservoir de trop-plein du radiateur et l'autre peut être utilisé pour stocker le liquide de lavage du pare-brise.

Une autre option consiste à fixer le panneau avant du véhicule pour la grille du radiateur à l'ensemble avant la fabrication.

On peut également envisager d'intégrer un carénage de ventilateur dans la partie supérieure moulée par injection. Lorsque le carénage du ventilateur n'est pas ainsi intégré, on préfère un carénage séparé, et les parties supérieure et inférieure de l'ensemble peuvent avoir des montages pour le carénage séparé.

Les parties supérieure et inférieure peuvent avoir des montages pour la fixation du tableau de bord et l'ensemble peut être modifié pour défléchir un courant d'air dans le compartiment moteur.

On a ainsi décrit diverses mises en pratique de l'invention. L'homme de l'art appréciera aisément que la portée de l'invention n'est pas limitée à ce qui a été décrit, mais qu'elle n'est limitée que par les revendications jointes.

## Revendications

1. Ensemble (1) pour une extrémité frontale de véhicule comprenant une première partie (10) et une deuxième partie (20), la première partie définissant des portions de montage (31, 32) des phares (40, 41) et ayant une région pour recevoir la partie supérieure d'un appareil de refroidissement (50) et la deuxième partie coopérant en utilisation avec la partie inférieure dudit appareil de refroidissement, **caractérisé en ce qu'**il comprend en outre des moyens de fixation (26) pour fixer la première partie sur la deuxième partie.

2. Ensemble selon la revendication 1, **caractérisé en ce que** lesdites première et deuxième parties comprennent toutes deux de la matière plastique.

3. Ensemble selon la revendication 1, **caractérisé en ce que** la première partie frontale (10) est moulée par injection et la deuxième partie (20) est moulée par extrusion-soufflage.

4. Ensemble selon la revendication 1, **caractérisé en ce que** les dispositifs de fixation sont constitués par des boulons (26) et des écrous.

5. Ensemble selon la revendication 1, **caractérisé en ce que** la première partie (10) comprend un élément métallique (11) sur lequel est moulée de la matière plastique (30).

6. Ensemble selon la revendication 5, **caractérisé en ce que** l'élément métallique (11) est allongé.

7. Ensemble selon la revendication 5, **caractérisé en ce que** l'élément métallique (11) a une portion de fixation pour permettre d'y fixer un verrou de capot (70).

8. Ensemble selon la revendication 1, **caractérisé en ce que** la deuxième partie (20) comprend en outre des dispositifs de fixation d'une poutre pare-chocs (60).

9. Ensemble selon la revendication 8, **caractérisé en ce que** les dispositifs de fixation de la poutre pare-chocs (60) comprennent des trous (28) dans une face avant de la deuxième partie (20).

10. Ensemble selon la revendication 9, **caractérisé en ce que** les trous (28) sont des trous traversants.

11. Ensemble selon la revendication 1, **caractérisé en ce que** la première partie (10) comprend une portion monobloc de carénage de ventilateur.

12. Ensemble selon la revendication 1, **caractérisé en ce que** les première et deuxième parties ont toutes deux des montages pour un carénage de ventilateur séparé.

13. Ensemble selon la revendication 1, **caractérisé en ce que** la première partie a des montages pour des fixations d'ailes du véhicule.

14. Ensemble selon la revendication 1, **caractérisé en ce que** l'ensemble définit en outre des portions de déflecteurs d'air pour diriger un courant d'air dans le compartiment moteur du véhicule.

15. Ensemble selon la revendication 1, **caractérisé en ce que** la deuxième partie est faite en deux demi-parties, une pour chaque côté de l'appareil de refroidissement (50).

16. Ensemble selon la revendication 1, **caractérisé en ce que** la deuxième partie intègre au moins un réservoir de stockage de liquide.

17. Module d'extrémité frontale de véhicule, **caractérisé en ce qu'**il comprend un appareil de refroidissement (50) et un ensemble selon l'une des revendications 1 à 16.

18. Procédé de montage d'un module d'extrémité frontale de véhicule, **caractérisé en ce qu'**il comprend les étapes suivantes :
- procurer une première partie (10) d'une extrémité frontale de véhicule, ladite première partie définissant des ouvertures (31, 32) pour les phares (40, 41) et ayant une région pour coopérer avec la partie supérieure d'un appareil de refroidissement (50) ;
- procurer une deuxième partie (20) d'une extrémité frontale de véhicule, ladite deuxième partie ayant une portion pour coopérer avec la partie inférieure dudit appareil de refroidissement ;
- procurer ledit appareil de refroidissement (50) ;
- disposer ledit appareil de refroidissement (50) en coopération avec ladite deuxième partie (20), et fixer ladite deuxième partie sur ladite première partie, d'où il résulte que ledit appareil de refroidissement est supporté par l'ensemble (1) constitué par lesdites première et deuxième parties.

19. Procédé selon la revendication 18, **caractérisé en ce que** ladite étape de fixation consiste à disposer des boulons (26) à travers des portions de l'une desdites première et deuxième parties (10, 20), à faire passer lesdits boulons à travers l'autre desdites parties et à fixer des écrous sur lesdits boulons.

20. Procédé selon la revendication 18, **caractérisé en ce qu'**il consiste en outre à procurer un pare-chocs structural (60) et à fixer ledit pare-chocs structural sur ladite deuxième partie (20).

21. Procédé selon la revendication 20, **caractérisé en ce qu'**il consiste à fixer ledit pare-chocs structural (60) sur le véhicule, d'où il résulte que ladite extrémité frontale et ledit appareil de refroidissement (50) sont fixés sur le véhicule.

22. Procédé selon la revendication 21, **caractérisé en ce qu'**il consiste en outre à fixer les ailes du véhicule sur la première partie de ladite extrémité frontale.

23. Procédé selon la revendication 18, **caractérisé en ce qu'**il consiste à procurer un verrou de capot (70) et à fixer ledit verrou de capot sur ladite première partie (10).

24. Procédé selon la revendication 18, **caractérisé en ce que** l'étape consistant à procurer la première partie comprend le surmoulage d'un élément métallique (11) et l'étape consistant à procurer la deuxième partie consiste à la former par extrusion-soufflage.

## Patentansprüche

1. Einheit (1) für ein Frontende eines Fahrzeugs, umfassend einen ersten Teil (10) und einen zweiten Teil (20), wobei der erste Teil Montageabschnitte (31, 32) für die Scheinwerfer (40, 41) definiert und einen Bereich aufweist, um den oberen Teil eines Kühlgeräts (50) aufzunehmen, und der zweite Teil während der Verwendung mit dem unteren Teil des Kühlgeräts zusammenwirkt, **dadurch gekennzeichnet, dass** sie ferner Befestigungsmittel (26) umfasst, um den ersten Teil auf dem zweiten Teil zu befestigen.

2. Einheit nach Anspruch 1, **dadurch gekennzeichnet, dass** der erste und der zweite Teil beide Kunststoff umfassen.

3. Einheit nach Anspruch 1, **dadurch gekennzeichnet, dass** der erste Frontteil (10) durch Spritzguss und der zweite Teil (20) durch Extrusion-Blasen hergestellt ist.

4. Einheit nach Anspruch 1, **dadurch gekennzeichnet, dass** die Befestigungsvorrichtungen von Bolzen (26) und Muttern gebildet sind.

5. Einheit nach Anspruch 1, **dadurch gekennzeichnet, dass** der erste Teil (10) ein metallisches Element (11) umfasst, auf das ein Kunststoffguss (30) aufgebracht ist.

6. Einheit nach Anspruch 5, **dadurch gekennzeichnet, dass** das metallische Element (11) länglich ist.

7. Einheit nach Anspruch 5, **dadurch gekennzeichnet, dass** das metallische Element (11) einen Befestigungsabschnitt aufweist, um an diesem einen Riegel (70) einer Kappe zu befestigen.

8. Einheit nach Anspruch 1, **dadurch gekennzeichnet, dass** der zweite Teil (20) ferner Mittel zur Befestigung eines Trägers eines Stoßdämpfers (60) umfasst.

9. Einheit nach Anspruch 8, **dadurch gekennzeichnet, dass** die Vorrichtungen zur Befestigung des Stoßdämpferträgers (60) Löcher (28) in einer Vorderseite des zweiten Teils (20) umfassen.

10. Einheit nach Anspruch 9, **dadurch gekennzeichnet, dass** die Löcher (28) durchgehende Löcher sind.

11. Einheit nach Anspruch 1, **dadurch gekennzeichnet, dass** der erste Teil (10) einen einstückigen Abschnitt für die Verkleidung eines Ventilators umfasst.

12. Einheit nach Anspruch 1, **dadurch gekennzeichnet, dass** der erste und zweite Teil beide Montagen für eine getrennte Verkleidung eines Ventilators aufweisen.

13. Einheit nach Anspruch 1, **dadurch gekennzeichnet, dass** der erste Teil Montagen für Befestigungen von Kotflügeln des Fahrzeugs umfasst.

14. Einheit nach Anspruch 1, **dadurch gekennzeichnet, dass** die Einheit ferner Luftablenkabschnitte definiert, um einen Luftstrom in das Motorabteil des Fahrzeugs zu lenken.

15. Einheit nach Anspruch 1, **dadurch gekennzeichnet, dass** der zweite Teil aus zwei halben Teilen, einem für jede Seite des Kühlgeräts (50), besteht.

16. Einheit nach Anspruch 1, **dadurch gekennzeichnet, dass** der zweite Teil mindestens einen Flüssigkeitsspeicherbehälter umfasst.

17. Frontendmodul eines Fahrzeugs, **dadurch gekennzeichnet, dass** es ein Kühlgerät (50) und eine Einheit nach einem der Ansprüche 1 bis 16 umfasst.

18. Verfahren zur Montage eines Frontendmoduls eines Fahrzeugs, **dadurch gekennzeichnet, dass** es die folgenden Schritte umfasst:
- Anbringen eines ersten Teils (10) eines Frontendes eines Fahrzeugs, wobei der erste Teil Öffnungen (31, 32) für die Scheinwerfer (40, 41) definiert und einen Bereich aufweist, um mit dem oberen Teil eines Kühlgeräts (50) zusammenzuwirken;
- Anbringen eines zweiten Teils (20) eines Frontendes eines Fahrzeugs, wobei der zweite Teil einen Abschnitt aufweist, um mit dem unteren Teil des Kühlgeräts zusammenzuwirken;
- Anbringen des Kühlgeräts (50);
- Sicherstellen des Zusammenwirkens des Kühlgeräts (50) mit dem zweiten Teil (20) und Befestigen des zweiten Teils auf dem ersten Teil, woraus sich ergibt, dass das Kühlgerät von der Einheit (1), die von dem ersten und dem zweiten Teil gebildet ist, getragen wird.

19. Verfahren nach Anspruch 18, **dadurch gekennzeichnet, dass** der Befestigungsschritt darin besteht, Bolzen (26) durch Abschnitte eines der ersten und zweiten Teile (10, 20) zu stecken, die Bolzen durch den anderen der Teile zu stecken und Muttern auf den Bolzen zu befestigen.

20. Verfahren nach Anspruch 18, **dadurch gekennzeichnet, dass** es ferner darin besteht, einen Strukturstoßdämpfer (60) anzubringen und diesen Strukturstoßdämpfer auf dem zweiten Teil (20) zu befestigen.

21. Verfahren nach Anspruch 20, **dadurch gekennzeichnet, dass** es darin besteht, den Strukturstoßdämpfer (60) auf dem Fahrzeug zu befestigen, woraus sich ergibt, dass das Frontende und das Kühlgerät (50) auf dem Fahrzeug befestigt werden.

22. Verfahren nach Anspruch 21, **dadurch gekennzeichnet, dass** es ferner darin besteht, die Kotflügel des Fahrzeugs auf dem ersten Teil des Frontendes zu befestigen.

23. Verfahren nach Anspruch 18, **dadurch gekennzeichnet, dass** es darin besteht, einen Riegel (70) einer Kappe anzubringen und diesen Riegel der Kappe auf dem ersten Teil (10) zu befestigen.

24. Verfahren nach Anspruch 18, **dadurch gekennzeichnet, dass** der Schritt, der darin besteht, den ersten Teil anzubringen, die Gussformung eines metallischen Elements (11) umfasst, und der Schritt, der darin besteht, den zweiten Teil anzubringen, die Formung durch Extrusion-Blasen umfasst.

## Claims

1. Assembly (1) for a vehicle front end, comprising a first part (10) and a second part (20), the first part defining portions (31, 32) for mounting the headlamps (40, 41) and having a region for receiving the upper part of a cooling apparatus (50) and the second part cooperating in use with the lower part of the said cooling apparatus, **characterized in that** it additionally comprises fastening means (26) for fastening the first part to the second part.

2. Assembly according to Claim 1, **characterized in that** the said first and second parts both comprise plastic.

3. Assembly according to Claim 1, **characterized in that** the first front part (10) is injection-moulded and the second part (20) is extrusion blow-moulded.

4. Assembly according to Claim 1, **characterized in that** the fastening devices consist of nuts and bolts (26).

5. Assembly according to Claim 1, **characterized in that** the first part (10) comprises a metal element (11) onto which the plastic (30) is moulded.

6. Assembly according to Claim 5, **characterized in that** the metal element (11) is elongate.

7. Assembly according to Claim 5, **characterized in that** the metal element (11) has a fastening portion to enable a bonnet catch (70) to be fastened thereon.

8. Assembly according to Claim 1, **characterized in that** the second part (20) additionally comprises devices for fastening a bumper beam (60).

9. Assembly according to Claim 8, **characterized in that** the devices for fastening the bumper beam (60) comprise holes (28) in a front face of the second part (20).

10. Assembly according to Claim 9, **characterized in that** the holes (28) are through holes.

11. Assembly according to Claim 1, **characterized in that** the first part (10) comprises an integral fan shroud portion.

12. Assembly according to Claim 1, **characterized in that** the first and second parts both have mountings for a separate fan shroud.

13. Assembly according to Claim 1, **characterized in that** the first part has mountings for vehicle wing attachments.

14. Assembly according to Claim 1, **characterized in that** the assembly additionally defines air deflector portions for directing an air flow into the vehicle engine compartment.

15. Assembly according to Claim 1, **characterized in that** the second part is made in two half-parts, one for each side of the cooling apparatus (50).

16. Assembly according to Claim 1, **characterized in that** the second part incorporates at least one liquid storage reservoir.

17. Vehicle front end module, **characterized in that** it comprise a cooling apparatus (50) and an assembly according to one of Claims 1 to 16.

18. Method of assembling a vehicle front end module, **characterized in that** it comprises the following steps:
- providing a first part (10) of a vehicle front end, the said first part defining openings (31, 32) for the headlamps (40, 41) and having a region for cooperating with the upper part of a cooling apparatus (50);
- providing a second part (20) of a vehicle front end, the said second part having a portion for cooperating with the lower part of the said cooling apparatus;
- providing the said cooling apparatus (50);
- arranging the said cooling apparatus (50) so that it cooperates with the said second part (20) and fastening the said second part to the said first part, whereby the said cooling apparatus is supported by the assembly (1) consisting of the said first and second parts.

19. Method according to Claim 18, **characterized in that** the said fastening step consists in placing bolts (26) through portions of one of the said first and second parts (10, 20), in passing the said bolts through the other of the said parts and in fastening nuts on the said bolts.

20. Method according to Claim 18, **characterized in that** it additionally consists in providing a structural bumper (60) and in fastening the said structural bumper to the said second part (20).

21. Method according to Claim 20, **characterized in that** it consists in fastening the said structural bumper (60) to the vehicle, whereby the said front end and the said cooling apparatus (50) are fastened to the vehicle.

22. Method according to Claim 21, **characterized in that** it additionally consists in fastening the vehicle wings to the first part of the said front end.

23. Method according to Claim 18, **characterized in that** it consists in providing a bonnet catch (70) and in fastening the said bonnet catch to the said first part (10).

24. Method according to Claim 18, **characterized in that** the step consisting in providing the first part comprises overmoulding a metal element (11) and the step consisting in providing the second part consists in forming it by extrusion blow-moulding.
